# DEMANDE DE BREVET EUROPEEN

(11) **EP 4 306 895 A1**
(43) Date de publication de la demande: **17.01.2024**
(21) Numéro de dépôt: 23183191.8
(22) Date de dépôt: 04.07.2023
(51) Int. Cl.: F28F 9/06

(54) **CONNECTEUR**

(30) Priorité: 12.07.2022 FR 2207144
(71) Demandeur: A. Raymond et Cie, 38000 Grenoble (FR)
(72) Inventeur: CHAUPIN, Jérôme, 38830 ST PIERRE ALLEVARD (FR); POGGI, Frédéric, 38600 FONTAINE (FR)
(74) Mandataire: Ipside

(57) **Abrégé**

L'invention concerne un connecteur (10A; 10B; 10C) pour connecter à un tube (20), comprenant une tête (200), un tiroir (600) muni d'un orifice de passage, et une bague de joint (400) disposée entre la tête et le tiroir, la tête (200) comportant un logement (230) apte à recevoir une première extrémité (602) du tiroir. Le tiroir reçu dans le logement (230) comprend :
- une première position, dite position d'assemblage, dans laquelle le tiroir (200) est apte à recevoir un tube (20) par une deuxième extrémité (604) du tiroir de sorte que le tube passe à travers la bague de joint (400); et
- une deuxième position, dite position de travail, dans laquelle la bague de joint (400) est susceptible d'être compressée par la première extrémité (602) du tiroir.

Le tiroir (600) se déplace de la première position à la deuxième position sous effet d'une force de poussée.

## Description

### Domaine technique de l'invention

La présente invention concerne un connecteur pour connecter à un tube, notamment à un tube à micro-canaux. La présente invention concerne également un ensemble d'un tel connecteur et un tube.

### Technique antérieure

Notamment, dans le domaine des véhicules à motorisation électrique et/ou hybride, l'énergie électrique est fournie par des batteries qui sont amenées à chauffer pendant le fonctionnement. Il est indispensable de refroidir les batteries afin d'éviter l'endommagement à cause des températures trop élevées. Généralement, la régulation thermique est assurée au moyen d'un fluide caloporteur qui circule dans un système de gestion thermique. On connaît de l'état de la technique des systèmes de gestion thermique comportant des tubes et des connecteurs qui sont utilisés à cette fin. Néanmoins, il existe des inconvénients dans ces systèmes, par exemple les tubes sont solidarisés aux connecteurs par brasage, ou l'assemblage des tubes et des connecteurs paraît laborieux, ou encore la structure est compliquée pour fournir une bonne and fiable étanchéité an sein du connecteur.

Le document brevet WO2020/187612 décrit une connexion entre un tube plat de mini-canaux en aluminium extrudé et un connecteur. Le dispositif prévu dans ce document exige une méthode de montage qui nécessite des manoeuvres complexes.

### Exposé de l'invention

La présente invention vise à remédier à ces inconvénients, en proposant un connecteur modulaire qui permet d'avoir un montage simplifié avec une force d'assemblage réduite et une structure simple tout en garantissant l'étanchéité requise. La présente invention concerne également l'ensemble d'un tel connecteur et un tube.

À cet effet, la présente invention concerne un connecteur pour connecter à un tube. Le connecteur comporte une tête, un tiroir muni d'un orifice de passage, et une bague de joint disposée entre la tête et le tiroir. La tête comprend un logement apte à recevoir une première extrémité du tiroir.

Selon un aspect de l'invention, le connecteur présente les caractéristiques suivantes : le tiroir reçu dans le logement comprend :
- une première position, dite position d'assemblage, dans laquelle le tiroir est apte à recevoir un tube par une deuxième extrémité du tiroir de sorte que le tube passe à travers la bague de joint; et
- une deuxième position, dite position de travail, dans laquelle la bague de joint est susceptible d'être compressée ou déformée par la première extrémité du tiroir;
et que le tiroir se déplace de la première position à la deuxième position sous effet d'une force de poussée.

Avantageusement, le connecteur présente une structure simple et fournit une bonne et fiable étanchéité.

Dans un mode de réalisation, le connecteur comprend une agrafe disposée entre la bague de joint et une butée au sein du logement et l'agrafe comprend un espace interne apte à recevoir au moins partiellement une section d'extrémité d'un tube.

Avantageusement, ceci permet de retenir davantage un tube qui est inséré dans le connecteur. L'agencement de l'agrafe permet d'éviter l'endommagement de la bague de joint par l'agrafe.

Dans un mode de réalisation, le tiroir est retenu à la tête dans la première position et/ou dans la deuxième position par des moyens de fixation mécanique. Avantageusement, ceci permet un assemblage simple sans besoin d'outil ou procédé spécial.

Dans un mode de réalisation, le tiroir est retenu à la tête dans la première position et/ou dans la deuxième position par une connexion à encliquetage. Avantageusement, ceci permet d'obtenir une sensation de clippage lors d'assemblage et un démontage simple.

Dans un mode de réalisation, la bague de joint est un anneau d'étanchéité. Dans un mode de réalisation, la bague de joint est prise en sandwich entre le tiroir et une paroi du logement lorsque le tiroir se trouve dans la deuxième position.

Avantageusement, ceci permet de garantir une étanchéité.

Dans un mode de réalisation, la bague de joint comprend au moins deux lèvres de retenue sur sa surface intérieure.

Avantageusement, ceci permet d'obtenir une meilleure étanchéité et/ou une meilleure préhension mécanique entre la bague de joint et le tube.

Dans un mode de réalisation, le tiroir et la bague de joint sont surmoulés. Avantageusement, ceci permet de garder la forme de la bague de joint avant d'introduire le tube, et donc éviter son endommagement par le tube.

Dans un mode de réalisation, la tête comporte une ouverture permettant de recevoir un outil pour dégager le tiroir dans la première position et/ou la deuxième position.

Dans un mode de réalisation, la tête comporte une cavité de forme triangulaire ou trapézoïdale dans la continué du logement.

Dans un mode de réalisation, la tête comporte des moyens de contrôle visuel permettant de vérifier l'état d'assemblage entre la tête et le tiroir.

Selon un deuxième aspect de l'invention, l'ensemble d'un connecteur et d'un tube présente les caractéristiques suivantes : le tube est reçu dans le tiroir de la tête.

Dans un mode de réalisation, dans la deuxième position, la bague de joint compressée ou déformée par le tiroir assure une étanchéité entre la tête et le tube.

Dans un mode de réalisation, dans la deuxième position, la bague de joint compressée ou déformée par le tiroir assure une préhension mécanique avec le tube.

Dans un mode de réalisation, le tube est un tube à micro-canaux comportant d'au moins une surface plane.

Dans un mode de réalisation, le tube est un tube à micro-canaux comportant d'au moins une surface ondulée.

Avantageusement, l'ensemble du connecteur et du tube sont apte à refroidir ou réchauffer des objets ayant une variété de surfaces.

Dans un mode de réalisation, dans la deuxième position, la bague de joint compressée ou déformée par le tiroir interfère avec une paroi intérieure du logement.

Avantageusement, ceci permet de renforcer l'étanchéité obtenue.

### Brève description des figures

D'autres avantages, buts et caractéristiques de la présente invention ressortent de la description qui suit faite, dans un but explicatif et nullement limitatif, en regard des dessins annexés, dans lesquels :
la Figure 1A représente une vue en perspective d'un connecteur comportant une tête, un tiroir et une bague de joint selon un mode de réalisation de la présente invention ;
la Figure 1B représente une vue en perspective d'un connecteur comportant une tête, un tiroir, une agrafe et une bague de joint selon un autre mode de réalisation de la présente invention ;
la Figure 2 représente une vue en éclaté d'un connecteur de la figure 1A et un tube ;
la Figure 3A représente une vue en perspective de la tête qui est un composant du connecteur ;
la Figure 3B représente une vue en perspective d'un tiroir auquel une bague de joint est solidarisée;
la Figure 4 représente une vue de connecteur qui est prêt à recevoir un tube ;
la Figure 5 représente une vue de connecteur assemblé comportant une agrafe et prêt à recevoir un tube ;
la Figure 6A représente une vue de connecteur de la présente invention qui reçoit un tube, le tiroir étant dans une première position ;
la Figure 6B représente une vue en coupe partielle de la Figure 6A ;
la Figure 6C représente une autre vue de connecteur de la présente invention qui reçoit un tube, le tiroir étant dans une première position ;
la Figure 7A représente une vue de connecteur de la présente invention ayant reçu un tube, le tiroir étant dans une deuxième position ;
la Figure 7B représente une vue en coupe partielle de la Figure 7A ;
la Figure 7C représente une autre vue de connecteur de la présente invention ayant reçu un tube, le tiroir étant dans une deuxième position ;
la Figure 8A représente une vue en coupe de la Figure 6C ;
la Figure 8B représente une vue en coupe de la Figure 7C ;
la Figure 9A représente une vue en perspective d'un groupe de cellules cylindriques dont les tubes de gestion thermique sont reliés par des connecteurs selon la présente invention ;
la Figure 9B représente une vue partielle du groupe de la figure 9A avec deux connecteurs à monter ;
la Figure 10A représente une vue de dessus d'un connecteur selon un mode de réalisation ayant reçu un tube ;
la Figure 10B représente une vue en coupe du dispositif de la Figure 10A ;
la Figure 10C représente une autre vue en coupe du dispositif de la Figure 10A ;
la Figure 11 représente une vue de dessus de connecteurs liés ayant tous reçu un tube.

### Description des modes de réalisation

Les différentes figures ainsi que les éléments d'une même figure ne sont pas nécessairement représentées à la même échelle. Sur l'ensemble des figures, les éléments identiques portent la même référence numérique.

La terminologie employée dans la présente description ne doit en aucun cas être interprétée de manière limitative ou restrictive, simplement parce qu'elle est employée en conjonction avec une description détaillée de certains modes de réalisation de l'invention.

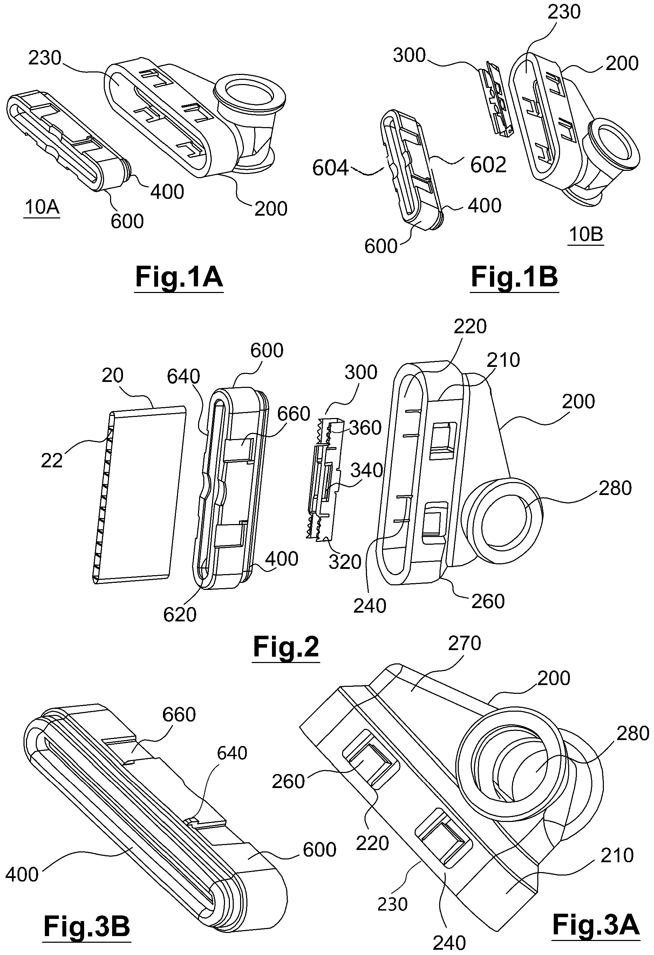

La Figure 1A montre une vue en perspective d'un connecteur 10A selon un mode de réalisation de la présente invention. Le connecteur 10A comprend une tête 200, un tiroir 600 et une bague de joint 400. La tête 200 comporte un logement 230 apte à recevoir une première extrémité 602 du tiroir. Le tiroir 600 est muni d'un orifice de passage et apte à recevoir un tube par une deuxième extrémité 604. En état de fonctionnement, la bague de joint 400 est disposée entre la tête et le tiroir.

Dans un mode de réalisation préféré, le tube 20 est un tube à mini canaux et/ou micro-canaux (Micro Port Extrusion ou MPE ou miltiport flat tube).

La Figure 1B montre une vue en perspective d'un connecteur 10B selon un autre mode de réalisation. Outre la tête 200, le tiroir 600 et une bague de joint 400, le connecteur 10B comporte avantageusement une agrafe 300. Comme on le verra par la suite, l'agrafe 300 permet de retenir davantage un tube qui est inséré dans le connecteur 10B. Avantageusement, l'agrafe 300 est métallique.

La Figure 2 montre une vue en éclaté du connecteur 10B ayant une agrafe 300 qui est prêt à connecter à un tube 20. En mode fonctionnement, le tiroir 600 est reçu dans le logement 230 de la tête 200. Le tube 20 passe à travers de l'orifice de passage 620 et de la bague de joint 400. Le tube est reçu par l'agrafe 300 se trouvant au fond du logement 230. Une extrémité du tube 20 est retenue par l'agrafe 300 qui est lui-même retenue par une paroi interne du logement 230 de la tête.

Avantageusement, l'agrafe 300 présente une section en « U » et définit un espace intérieur destiné à recevoir une extrémité du tube 20. L'agrafe 300 comporte avantageusement des moyens de retenue intérieurs, comme patte intérieure 340 ou contre dépouille, pour retenir le tube. L'agrafe 300 comporte également des moyens de retenue extérieurs, comme patte extérieure 360 ou contre dépouille, permettant être retenue par la tête 200 dans le logement 230. Avantageusement, l'agrafe 300 est disposée entre la bague de joint 400 et la tête 200. Le tube 20 passe à travers de la bague de joint et puis est retenu par l'agrafe 300. Ceci permet d'éviter l'endommagement de la bague de joint par l'agrafe.

Sur la Figure 3A, on observe la tête 200 du connecteur, qui comporte un corps 210 apte à recevoir le tiroir 600 avec son logement 230.

La tête 200 comporte avantageusement un embout 280 qui permet d'intégrer la tête 200 dans un réseau de circulation de fluide, tel qu'un fluide caloporteur. Avantageusement, ceci permet un montage rapide du connecteur dans un système de gestion thermique. De plus, le connecteur est démontable du système de gestion thermique et donc réutilisable.

Dans un mode de réalisation préféré, la tête comporte un embout mâle 280A et un embout femelle 280B, ce qui permet aux têtes 200 de se connecter entre elles directement ou via des adaptateurs.

Avantageusement, aucune pièce de connexion est nécessaire pour lier directement des connecteurs et former un passage de circulation.

Dans un mode de réalisation préféré, la tête 200 est munie d'une cavité de forme triangulaire ou trapézoïdale 270, comme on le verra plus loin.

La Figure 3B représente un mode de réalisation préféré dans lequel le tiroir 600 est solidarisé à la bague de joint 400. Il est particulièrement avantageux, car ceci permet de poser la bague de joint 400 dans le logement 230 tout en gardant sa forme. Dans un mode de réalisation préféré, le tiroir 600 et la bague de joint 400 sont surmoulé.

Selon un mode de réalisation non illustré, le tiroir 600 et la bague de joint 400 sont deux pièces séparées. La bague de joint peut être préposée sur le tiroir 600 avant qu'il soit inséré dans le logement 230.

Dans un mode de réalisation, la bague de joint 400, indépendamment du tiroir 600, peut être introduite dans le logement 230 de la tête 200.

Le tiroir 600 comporte un premier élément de blocage 640, tel qu'une contre dépouille, qui peut coopérer avec le premier moyen de fixation 220 de la tête, tel qu'une fenêtre, pour former un premier moyen de fixation mécanique, tel qu'une connexion par encliquetage. Avantageusement, ceci permet de maintenir le tiroir dans une première position au sein du logement 230 de la tête. Dans cette première position, le tiroir 600 est préassemblé dans la tête. Le tiroir 600 comporte un deuxième élément de blocage 660, tel qu'une contre dépouille, qui peut coopérer avec le deuxième moyen de fixation 240 de la tête, tel qu'une fenêtre, pour former un deuxième moyen de fixation mécanique, tel qu'une connexion par encliquetage. Avantageusement, ceci permet de maintenir le tiroir dans une deuxième position au sein du logement 230 de la tête.

Avantageusement, la tête 200 comporte ouverture permettant de recevoir un outil pour dégager le tiroir 600 dans la première position et/ou la deuxième position. En d'autres termes, le connecteur est démontrable à l'aide d'un simple outil.

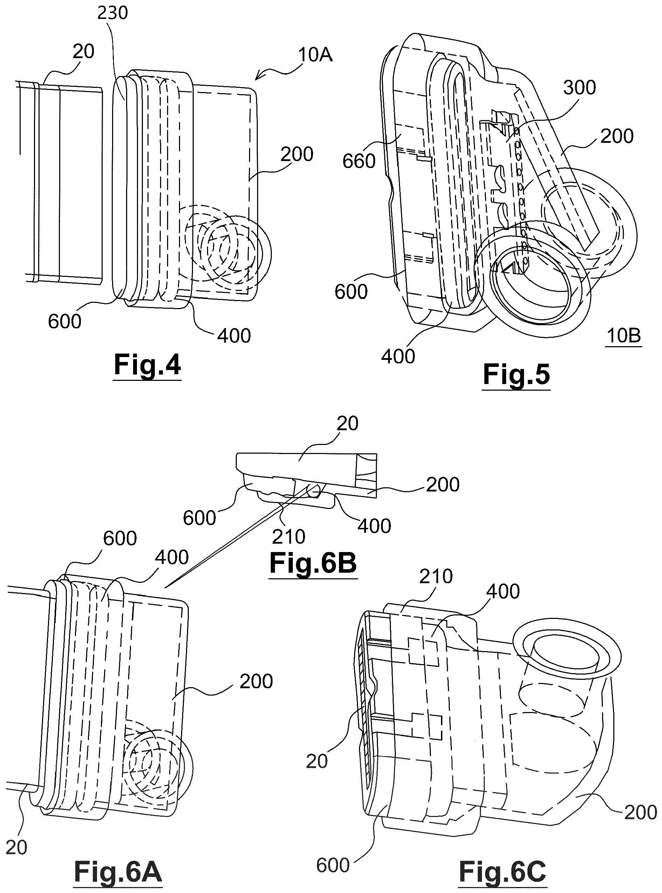

Sur la Figure 4, on observe un connecteur 10A, dans lequel le tiroir 600 est reçu dans la tête 200 avec la bague de joint 400 disposée entre la tête et le tiroir. Le tiroir 600 se trouve dans une première position, dite position d'assemblage, dans laquelle le tiroir 600 est prêt à recevoir un tube 20 par une extrémité de sorte que le tube 20 passe à travers la bague de joint 400. Dans le mode de réalisation illustré sur la Figure 5, le connecteur 10B comporte une agrafe 300 se trouvant au fond du logement 230 pour retenir au moins partiellement une section d'extrémité du tube 20.

On introduit ensuite le tube dans le tiroir 600 en le poussant vers la tête 200 jusqu'en butée avec le fond du logement 230. Dans le mode de réalisation illustré sur les Figures 6A et 6C, le tiroir 600 est dans la première position vis-à-vis de la tête 200. Le tube 20 passe à travers de la bague de joint 400. Dans un mode de réalisation préféré, la bague de joint 400 n'entre pas en contact avec le tube 20 dans cette première position. Avantageusement, ceci permet d'éviter l'endommagement de la bague de joint 400 par le tube 20 lors de son introduction.

Sur la Figure 6B, on observe que la bague de joint 400 se trouve entre la paroi latérale du logement 230 et le tube 20, d'une part, et entre le tiroir 600 et le fond du logement 230, d'autre part.

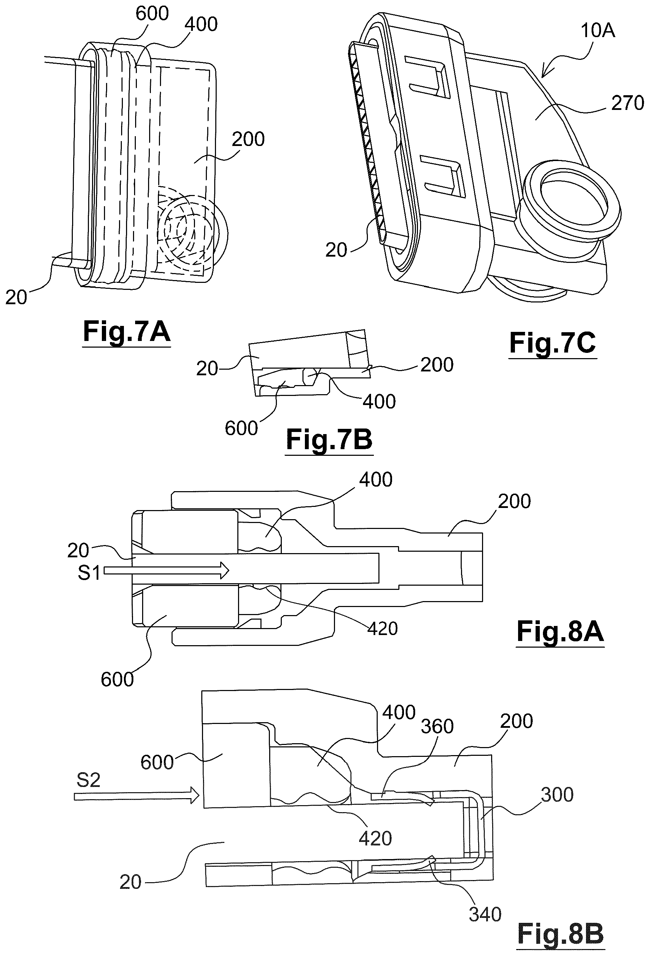

On appuie ensuite le tiroir 600 de sorte qu'il se déplace de la première position à une deuxième position, dite position de travail, dans le logement 230. Dans cette deuxième position, la bague de joint 400 est compressée ou déformée par le tiroir 600. Les Figures 7A et 7C illustrent cette position de travail. Comme illustré sur la Figure 6B, la bague de joint 400 est prise en sandwich entre le tiroir 600 et une paroi interne du logement 230 dans la deuxième position.

Dans un mode de réalisation préféré, la tête 200 est complétée par une cavité de forme triangulaire ou trapézoïdale 270. Le fluide qui sort du tube 20 entre dans la cavité de forme triangulaire ou trapézoïdale de la tête 200 avant de sortir par l'embout 280. Avantageusement, ceci permet d'atténuer la pression hydraulique exercée par le fluide dans le connecteur et le tube.

Dans un mode de réalisation, la tête comporte des moyens de contrôle visuel permettant de vérifier l'état d'assemblage entre la tête et le tiroir, par exemple une fenêtre de contrôle.

Avantageusement, la bague de joint 400 est un anneau d'étanchéité compressible et présente une forme simple d'anneau.

Avantageusement, la bague de joint présente une forme qui adapte à la section du tube 20 et à la paroi du logement 230.

Dans un mode de réalisation préféré, la bague de joint 400 est avantageusement réalisée en matériau élastomère.

En état compressé, la bague de joint 400 entre en contact avec la surface du tube 20, ceci permettant d'assurer l'étanchéité entre le tube et la bague de joint. Encore avantageusement, la bague de joint 400 compressée par le tiroir 600 assure une préhension mécanique avec le tube qui est retenu dans le connecteur malgré la pression du fluide.

Avantageusement, la bague de joint 400 est de matériau adapté qui permet de résiste à la différence de pression du fluide.

La Figure 8A représente une vue en coupe de la Figure 6C. S1 signifie le sens de circulation de fluide dans le tube 20. Le fluide peut circuler également dans le sens inverse. Le tiroir 600 logé dans la tête 200 se trouve dans la première position. La tête 200 comporte avantageusement un orifice moins large dans la continuité du logement 230. Cet orifice fait partie du réseau de circulation de fluide. On pourra ensuite appuyer le tube 20 inséré dans l'orifice de passage du tiroir jusqu'en butée.

Dans un mode de réalisation, le tube 20 est encastré dans l'orifice de la tête.

La Figure 8B représente une vue en coupe de la Figure 7C. S2 signifie le sens de force de poussée appliquée sur le tiroir 600 pour qu'il se déplace dans la deuxième position.

Avantageusement, le fait que le tiroir 600 entre dans sa deuxième position donne à l'opérateur une sensation de clippage.

La bague de joint 400 prise en sandwich entre le tiroir 600 et une paroi du logement 230 se déforme en deuxième position, de sorte à créer une interférence avec la paroi du logement 230 et avec la surface externe du tube 20. La présence de référence assure avantageusement l'étanchéité des différentes interfaces. Avantageusement, le tube 20 présente une surface extérieure rigide. Ceci permet de renforcer l'étanchéité obtenue. Avantageusement, ceci permet de réduire la force d'assemblage, plus particulièrement la force pour introduire le tube, car la bague de joint est compressée par le tiroir après l'introduction du tube 20 dans le connecteur. Cette déformation élastique assure l'étanchéité de contact au niveau du plan de joint.

Avantageusement, la déformation de la bague de joint permet d'augmenter la pression de contact entre la bague de joint et le tube.

Dans un mode de réalisation non illustré, la bague de joint 400 est munie de deux lèvres 420 de retenue sur sa surface interne. Ceci permet d'obtenir une meilleure étanchéité et/ou une meilleure préhension mécanique vis-à-vis du tube 20. La bague de joint peut comporter encore plus de lèvres de retenue sur sa surface interne.

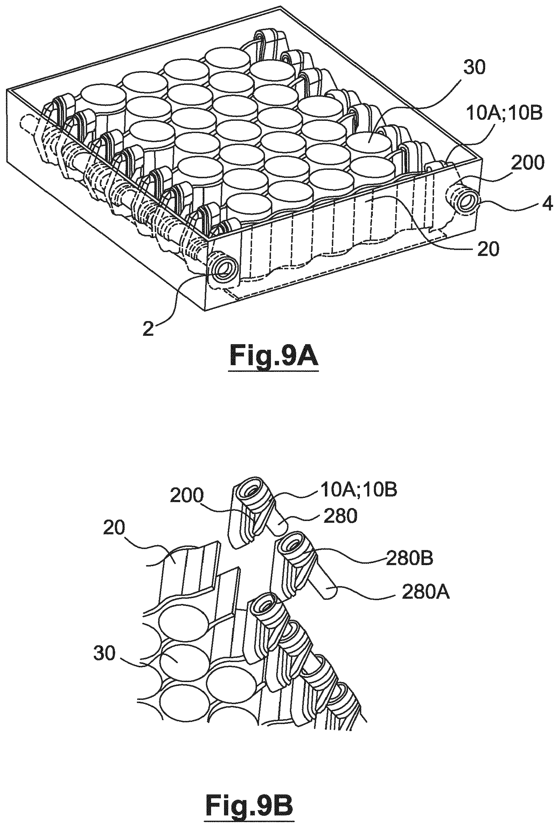

La Figure 9A représente une vue en perspective d'un groupe de batteries cylindriques 30 intégrées dans un système de gestion thermique dont les tubes 20 de gestion thermique sont reliés aux connecteurs 10A, 10B selon la présente invention. Avantageusement, le tube 20 présente au moins une surface ondulée qui est en contact avec des objets à refroidir tels que des batteries prismatiques 30. Le système de gestion thermique comporte en outre une entrée 2 et une sortie 4 commune.

Dans un mode de réalisation non illustré, le tube 20 présente avantageusement au moins une surface plane qui est en contact avec des objets à refroidir tels que des batteries de type «pouch», cylindriques, prismatiques.

La Figure 9B montre une vue partielle du groupe de batteries de la figure 9A.

Avantageusement, l'embout mâle 280A et l'embout femelle 280B permettent aux connecteurs de se relier et de s'intégrer dans le système de gestion thermique.

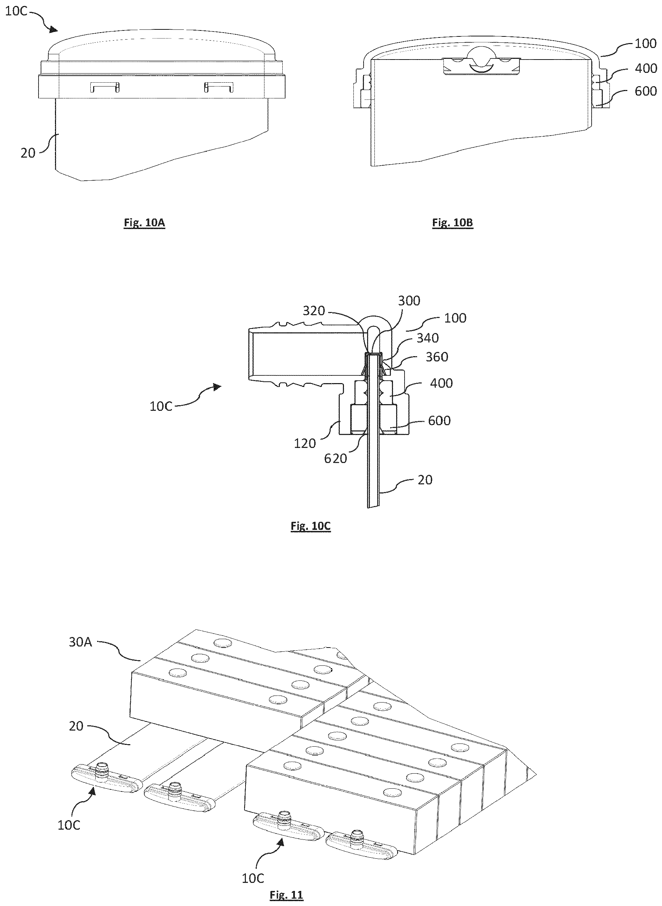

Les Figures 10A-10C illustrent un variant d'un connecteur selon la présente invention. Ce connecteur peut reprendre toutes les caractéristiques d'un connecteur présenté auparavant dans cette divulgation.

Sur la Figure 10A, on observe une vue de dessus d'un connecteur 10C selon ce mode de réalisation ayant reçu un tube 20.

La tête 100 comporte un embout sur le même plan de la tête 100. Avantageusement, la tête 100 est munie, sur le même plan que la tête, de deux embouts opposés, ceci permettant aux connecteurs de se relier directement ou via un adaptateur.

On observe sur la Figure 10B une vue en coupe d'un connecteur selon ce mode de réalisation. Le tiroir 600 se trouve dans la deuxième position avec la bague de joint 400 compressée prise en sandwich entre le tiroir et une paroi du logement.

La Figure 10C représente une autre vue en coupe d'un connecteur 10C de la Figure 10A qui comporte en outre une agrafe 300. Le tube 20 est retenu par l'agrafe 300 dans cette position.

La Figure 11 représente une vue en perspective d'un groupe de batteries prismatiques 30A intégrées dans un système de gestion thermique.

On observe sur la Figure 11 une partie d'un système de gestion thermique dans lequel des connecteurs 10C sont interconnectés et sont connectés aux tubes 20.

Dans un mode de réalisation non illustré, les connecteurs 10C sont interconnectés via un adaptateur.

### LISTE DES SIGNES DE RÉFÉRENCE

**[Tableaux 1]**

| Références | Désignations |
|---|---|
| 10A ;10B ;10C | Connecteur |
| 20 | Tube |
| 22 | Canal |
| 30 | Batterie (cellule cylindrique) |
| 30A | Batterie (cellule prismatique) |
| 100 | Tête |
| 200 | Tête |
| 210 | Corps |
| 220 | Premier moyen de fixation |
| 230 | Logement |
| 240 | Deuxième moyen de fixation |
| 260 | Moyens de contrôle visuel |
| 270 | Partie triangulaire ou trapézoïdale |
| 280 | Embout |
| 280A | Embout mâle |
| 280B | Embout femelle |
| 300 | Agrafe |
| 320 | Espace interne |
| 340 | Patte intérieure |
| 360 | Patte extérieure |
| 400 | Bague de joint |
| 420 | Lèvre de retenue |
| 600 | Tiroir |
| 602 | Première extrémité |
| 604 | Deuxième extrémité |
| 640 | Premier élément de blocage |
| 660 | Deuxième élément de blocage |

## Revendications

1. Connecteur (10A; 10B; 10C) pour connecter à un tube (20), comprenant une tête (200), un tiroir (600) muni d'un orifice de passage (620), et une bague de joint (400) disposée entre la tête et le tiroir, la tête (200) comportant un logement (230) apte à recevoir une première extrémité (602) du tiroir,
**caractérisé en ce que**
le tiroir reçu dans le logement (230) comprend :
une première position, dite position d'assemblage, dans laquelle le tiroir (200) est apte à recevoir un tube (20) par une deuxième extrémité (604) du tiroir de sorte que le tube passe à travers la bague de joint (400); et
une deuxième position, dite position de travail, dans laquelle la bague de joint (400) est susceptible d'être compressée par la première extrémité (602) du tiroir; et
que le tiroir (600) se déplace de la première position à la deuxième position sous effet d'une force de poussée.

2. Connecteur (10B) selon la revendication 1, **caractérisé en ce qu'**il comprend une agrafe (300) disposée entre la bague de joint (400) et une butée au sein du logement (230) et l'agrafe comprend un espace interne (320) apte à recevoir au moins partiellement une section d'extrémité d'un tube (20).

3. Connecteur (10A; 10B; 10C) selon l'une des revendications précédentes, **caractérisé en ce que** le tiroir (200) est retenu à la tête (200) dans la première position et/ou dans la deuxième position par des moyens de fixation mécanique.

4. Connecteur (10A; 10B; 10C) selon l'une des revendications précédentes, **caractérisé en ce que** le tiroir (200) est retenu à la tête (200) dans la première position et/ou dans la deuxième position par une connexion à encliquetage.

5. Connecteur (10A; 10B; 10C) selon l'une des revendications précédentes, dans lequel la bague de joint (400) est un anneau d'étanchéité.

6. Connecteur (10A; 10B; 10C) selon l'une des revendications précédentes, dans lequel la bague de joint (400) est prise en sandwich entre le tiroir (600) et une paroi du logement (230) lorsque le tiroir (600) se trouve dans la deuxième position.

7. Connecteur (10A; 10B; 10C) selon l'une des revendications précédentes, dans lequel la bague de joint (400) comprend au moins deux lèvres de retenue (420) sur sa surface intérieure.

8. Connecteur (10A; 10B; 10C) selon l'une des revendications précédentes, dans lequel le tiroir (600) et la bague de joint (400) sont surmoulés.

9. Connecteur (10A; 10B; 10C) selon l'une des revendications précédentes, dans lequel la tête (200) comporte une ouverture permettant de recevoir un outil pour dégager le tiroir (600) dans la première position et/ou la deuxième position.

10. Connecteur (10A; 10B; 10C) selon l'une des revendications précédentes, dans lequel la tête (200) comporte une cavité de forme triangulaire ou trapézoïdale dans la continué du logement (230).

11. Connecteur (10A; 10B; 10C) selon l'une des revendications précédentes, dans lequel la tête (200) comporte des moyens de contrôle visuel permettant de vérifier l'état d'assemblage entre la tête (200) et le tiroir (600).

12. Ensemble d'un connecteur selon l'une des revendications 1 à 11 et un tube reçu dans le tiroir (600).

13. Ensemble selon la revendication 12, **caractérisé en ce que**, dans la deuxième position, la bague de joint (400) compressée par le tiroir (600) assure une étanchéité entre la tête (200) et le tube (20).

14. Ensemble selon la revendication 12 ou 13, **caractérisé en ce que**, dans la deuxième position, la bague de joint (400) compressée par le tiroir (600) assure une préhension mécanique avec le tube (20).

15. Ensemble selon la revendication 12 à 14, **caractérisé en ce que**, le tube est un tube à micro-canaux comportant d'au moins une surface plane.

16. Ensemble selon la revendication 12 à 14, **caractérisé en ce que**, le tube est un tube à micro-canaux comportant d'au moins une surface ondulée.

17. Ensemble selon l'une des revendications 12 à 16, **caractérisé en ce que**, dans la deuxième position, la bague de joint (400) compressée par le tiroir (600) interfère avec une paroi intérieure du logement (230).
